# FASCICULE DE BREVET EUROPEEN

(11) **EP 4 136 308 B1**
(45) Date de publication et mention de la délivrance du brevet: **17.04.2024**
(21) Numéro de dépôt: 21719276.4
(22) Date de dépôt: 09.04.2021
(51) Int. Cl.: E06B 9/17, H02J 7/35, H02K 11/30

(54) **DISPOSITIF DE MOTORISATION D'ORGANE DE FERMETURE OU D'OCCULTATION DANS UN BATIMENT À PARTIR D'UNE SOURCE D'ENERGIE SOLAIRE**
VORRICHTUNG ZUM ANTRIEB EINES SCHLIESS- ODER BESCHATTUNGSELEMENTS IN EINEM GEBÄUDE MITTELS EINER SOLARENERGIEQUELLE
DEVICE FOR DRIVING A CLOSURE OR SHADING MEMBER IN A BUILDING BY MEANS OF A SOLAR ENERGY SOURCE

(30) Priorité: 15.04.2020 FR 2003763
(43) Date de publication de la demande: 22.02.2023
(73) Titulaire: ABC Volet, 74700 Sallanches (FR)
(72) Inventeur: GRECO, Xavier, 74700 Sallanches (FR)
(74) Mandataire: Cabinet Poncet
(86) Numéro de dépôt international: PCT/IB2021/052946
(87) Numéro de publication internationale: WO 2021/209869

(56) Documents cités:
- EP-A1- 3 300 090
- WO-A1-2018/216023
- CN-A- 107 489 334

## Description

### DOMAINE TECHNIQUE DE L'INVENTION

La présente invention concerne le domaine des fermetures ou occultations motorisées dans un bâtiment.

Les organes de fermetures ou d'occultation motorisés dans les bâtiments peuvent constituer par exemple un volet roulant pour porte ou fenêtre, un store, une porte de garage. Le couple d'entraînement nécessaire pour manoeuvrer l'organe de fermeture ou d'occultation dépend de la masse à déplacer.

Dans le cas d'une faible masse à déplacer, par exemple pour un volet roulant de fenêtre ou de porte, ou pour un store de faible dimension, le couple d'entraînement nécessaire est relativement faible, inférieur à 10 Nm. Dans ce cas, il est possible d'utiliser aisément une source d'énergie électrique solaire telle qu'un panneau solaire délivrant une tension électrique continue, qui alimente directement un élément accumulateur d'énergie électrique à tension électrique continue, lequel élément accumulateur d'énergie électrique est capable d'alimenter directement un moteur à courant continu ayant une tension nominale de l'ordre de 12 V et couplé mécaniquement à l'organe de fermeture ou d'occultation. Le système peut alors fonctionner en toute autonomie, ne nécessitant pas de câbles à installer ou à sortir, et ne nécessitant pas de disposer d'une alimentation électrique raccordée au réseau public de distribution d'énergie électrique.

Par exemple, le document WO 2018/216023 A1 décrit un dispositif de motorisation d'organe de fermeture dans un bâtiment à partir d'une source d'énergie électrique solaire constituée par des panneaux photovoltaïques formant eux-mêmes l'organe d'occultation. Les panneaux photovoltaïques délivrent une tension électrique continue à un accumulateur. Un circuit de commande permet de piloter le fonctionnement d'un moteur qui entraîne l'organe de fermeture. Le document ne décrit pas l'utilisation d'un moteur à courant alternatif. Le dispositif comprend en outre un convertisseur DC-AC qui transforme l'énergie électrique de sortie à tension électrique continue de l'élément accumulateur d'énergie électrique en une énergie électrique à tension alternative disponible sur une borne de sortie pour l'alimentation de divers dispositifs alternatifs conventionnels. Le document ne décrit pas l'alimentation du moteur par le convertisseur DC-AC. Le dispositif peut convenir pour l'entraînement d'un organe d'occultation ayant une faible masse.

Par contre, dans le cas d'une plus grande masse à déplacer, par exemple pour un store de grande dimension ou pour une porte de garage, le couple d'entraînement nécessaire peut-être beaucoup plus important, généralement supérieur à 10 Nm. On utilise alors un moteur électrique à courant alternatif, fonctionnant à la tension d'alimentation habituelle de 230 V, alimenté à partir du réseau public de distribution d'énergie électrique. Le système ne peut alors pas fonctionner en toute autonomie, et il nécessite l'installation de câbles d'alimentation.

### EXPOSE DE L'INVENTION

Un problème proposé par la présente invention est de concevoir un dispositif perfectionné de motorisation d'organe de fermeture ou d'occultation dans un bâtiment à partir d'une source d'énergie électrique solaire, apte d'une part à entraîner mécaniquement tous types d'organes d'occultation ou de fermeture grâce à un couple d'entraînement d'intensité suffisante, et apte d'autre part à fonctionner en toute autonomie grâce à l'utilisation de la seule énergie solaire.

Pour cela, l'invention vise à utiliser comme moyen d'entraînement un moteur électrique à courant alternatif et à tension nominale de 230 V, afin de bénéficier d'une plus grande gamme de protocoles de contrôle pour couvrir l'ensemble du marché, de bénéficier d'un moindre coût vis-à-vis des moteurs à courant continu à puissance égale, et de bénéficier d'une meilleure robustesse grâce à l'absence de pièces internes en frottement. La difficulté est alors d'alimenter un tel moteur électrique à courant alternatif 230 V à partir d'une source d'énergie électrique solaire délivrant un courant électrique continu à basse tension, l'ensemble de l'alimentation devant être suffisamment peu encombrant pour être logé dans un caisson de motorisation d'organe d'occultation ou de fermeture.

Pour atteindre ces objets ainsi que d'autres, l'invention propose un dispositif de motorisation d'organe de fermeture ou d'occultation dans un bâtiment, comprenant :
- au moins un moteur couplé mécaniquement à l'organe de fermeture ou d'occultation,
- un élément accumulateur d'énergie électrique à courant continu,
- une source d'énergie électrique solaire délivrant une tension électrique continue,
- un convertisseur DC-AC qui transforme l'énergie électrique de sortie à tension électrique continue de l'élément accumulateur d'énergie électrique en une énergie électrique à tension alternative de sortie, dans lequel :
- le moteur est un moteur électrique à courant alternatif basse tension ayant une tension électrique efficace dans la plage comprise entre 50 et 1000 V,
- la source d'énergie électrique solaire délivre une tension électrique continue inférieure à la tension électrique efficace du moteur électrique,
- l'élément accumulateur d'énergie électrique présente une tension nominale inférieure à ladite tension électrique efficace et supérieure à la tension électrique continue délivrée par la source d'énergie électrique solaire,
- un chargeur DC-DC convertit l'énergie électrique de sortie de la source d'énergie électrique solaire en une énergie électrique à la tension électrique de recharge de l'élément accumulateur d'énergie électrique à courant continu,
- le convertisseur DC-AC alimente ledit moteur électrique à courant alternatif.

Avantageusement, la tension électrique efficace du moteur électrique est de 230 V environ. De la sorte, on peut utiliser à moindre coût les moteurs électriques les plus courants et de grande série dans le domaine des organes d'occultation ou de fermeture de grande dimension.

Selon un autre aspect, la présente invention vise à maximiser le rendement du dispositif, afin de disposer, dans un volume limité par l'encombrement admissible du dispositif, d'une autonomie énergétique suffisante pour l'entraînement de l'organe fermeture même dans le cas d'un faible rayonnement solaire et/ou d'une faible dimension des panneaux solaires constituant la source d'énergie électrique solaire.

Pour atteindre ces buts ainsi que d'autres, on peut avantageusement prévoir que la tension nominale de l'élément accumulateur d'énergie électrique est comprise dans une plage de 24 V à 30 V environ, réalisant un bon compromis qui optimise le rendement des circuits électroniques transformant d'une part l'énergie électrique continue de la source d'énergie électrique solaire en énergie électrique continue délivrée dans l'élément accumulateur d'énergie électrique, et transformant d'autre part l'énergie électrique continue de l'élément accumulateur d'énergie électrique en énergie électrique alternative délivrée au moteur électrique à courant alternatif.

Également, dans le but d'optimiser le rendement énergétique, on peut avantageusement prévoir que le chargeur DC-DC est piloté par un circuit de commande régulant la tension électrique et le courant électrique prélevés sur la source d'énergie électrique solaire de façon à rester au plus près du point de puissance maximum de la source d'énergie électrique solaire.

Egalement, dans le but d'optimiser le rendement énergétique, mais également dans le but de réduire la dimension du dispositif pour permettre son insertion dans les caissons de motorisation couramment utilisés, on peut avantageusement prévoir que le convertisseur DC-AC est un convertisseur à deux étages successifs, comprenant un premier étage sous forme d'un convertisseur DC-DC élévateur de tension qui convertit la tension électrique continue de l'élément accumulateur d'énergie électrique en une tension de sortie continue au minimum équivalente à la tension de crête de l'onde de la tension finale envisagée pour l'alimentation du moteur électrique, et comprenant un deuxième étage qui transforme la tension de sortie continue du premier étage en une tension alternative sinusoïdale de forme et d'amplitude appropriées pour alimenter le moteur électrique, de sorte que le deuxième étage alimente le moteur électrique.

Le premier étage peut comprendre un pont en H de commutateurs électroniques, dont les points d'entrée sont aux bornes de l'élément accumulateur d'énergie électrique, et dont les points de jonction alimentent le primaire d'un transformateur élévateur de tension dont le secondaire alimente un élément redresseur fournissant ladite tension de sortie continue. Le transformateur élévateur de tension peut être un transformateur planaire apte à fonctionner à haute fréquence, de façon que son volume soit réduit et que son rendement soit élevé. Un fonctionnement à 50 kHz peut être avantageux pour minimiser les pertes à la fois dans le transformateur et dans les commutateurs électroniques.

Le second étage peut comprendre un pont en H de commutateurs électroniques, dont les points d'entrée sont aux bornes de l'élément redresseur, dont les points de jonction alimentent le moteur par l'intermédiaire d'un filtre passe bas, les commutateurs électroniques étant pilotés par un microcontrôleur programmé pour réaliser une modulation de largeur d'impulsions bipolaire produisant une tension de sortie en créneaux à rapport cyclique variable qui, après filtration par le filtre passe bas, alimente le moteur par une tension monophasée sensiblement sinusoïdale.

Selon un autre aspect, l'invention propose un organe de fermeture ou d'occultation dans un bâtiment, muni d'un dispositif de motorisation tel que défini ci-dessus.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est un synoptique fonctionnel du dispositif selon un mode de réalisation de la présente invention, illustrant les organes principaux du dispositif ;
[Fig.2] La figure 2 est un schéma électrique d'un chargeur DC-DC selon un mode de réalisation de la présente invention, pour alimenter l'élément accumulateur d'énergie électrique continue à partir d'une source d'énergie électrique solaire ;
[Fig.3] La figure 3 est un schéma électrique d'un convertisseur DC-DC élévateur de tension selon un mode de réalisation de la présente invention, réalisant le premier étage du convertisseur DC-AC ;
[Fig.4] La figure 4 est un schéma électrique du deuxième étage du convertisseur DC-AC selon un mode de réalisation de la présente invention ;
[Fig.5] La figure 5 est un diagramme temporel illustrant la forme d'onde modulée en largeur d'impulsions bipolaire de la tension électrique de sortie du convertisseur DC-AC alimentant le moteur électrique à courant alternatif : et
[Fig.6] La figure 6 illustre le positionnement, dans un caisson de motorisation, de la source d'énergie électrique solaire et de l'ensemble des circuits électroniques selon la présente invention pour l'alimentationdu moteur d'entraînement d'un organe d'occultation ou de fermeture.

### DESCRIPTION DES MODES DE REALISATION PREFERES

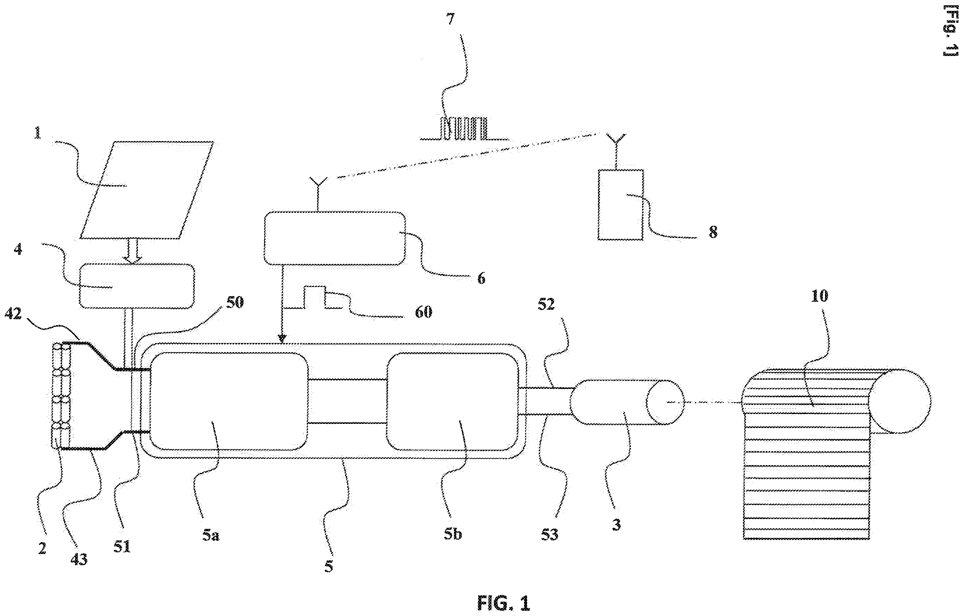

Comme illustré sur la figure 1, le dispositif selon l'invention comprend de façon générale une source d'énergie électrique solaire 1, un élément accumulateur d'énergie électrique 2, et un moteur électrique à courant alternatif 3.

La source d'énergie électrique solaire 1 est sous forme d'un panneau solaire photovoltaïque, délivrant directement l'énergie sous forme électrique. La tension de sortie de la source d'énergie électrique solaire 1 est comprise dans une plage de 12 à 18 V environ, à savoir la plage habituelle des tensions de sortie des panneaux solaires photovoltaïques. La puissance de sortie du panneau photovoltaïque doit être la plus grande possible par rapport à la surface faible que l'on veut bien lui allouer. Une puissance typique de l'ordre de 5 ou 6 W crête peut convenir. La technologie utilisée pour le panneau photovoltaïque doit donc être assez performante, par exemple de type monocristalline ou polycristalline.

Le moteur électrique à courant alternatif 3 est d'un type pouvant être alimenté par une tension électrique monophasée efficace dans la plage comprise entre 50 et 1000 volts, avantageusement de l'ordre de 230 V environ, et apte à délivrer un couple nominal de 10 Nm à 80 Nm, par exemple un couple nominal de 50 Nm environ.

La tension nominale de l'élément accumulateur d'énergie électrique 2 est comprise dans une plage de 24 à 30 V environ, constituant une tension électrique intermédiaire entre la tension nominale délivrée par la source d'énergie électrique solaire 1 et la tension nominale d'alimentation du moteur électrique 3, permettant d'atteindre plus facilement la tension nécessaire au fonctionnement du moteur électrique 3. En pratique, cet élément accumulateur d'énergie électrique 2 est un pack d'accumulateurs mis en série. Chaque accumulateur est une batterie Li-Ion ayant une tension nominale de 3.6 V et dont la capacité unitaire est de 2600 milliampères heures au minimum. Ainsi, l'élément accumulateur d'énergie électrique 2 peut être réalisé par exemple par la mise en série de 8 batteries de 3.6 V.

Pour permettre de recharger l'élément accumulateur d'énergie électrique 2 à tension nominale comprise entre 24 et 30 volts environ, à partir d'une source d'énergie électrique solaire 1 présentant une tension nominale inférieure, de 12 à 18 V environ, on interpose, entre la source d'énergie électrique solaire 1 et l'élément accumulateur d'énergie électrique 2, un chargeur DC-DC 4 qui convertit l'énergie électrique de sortie à tension électrique faible de la source d'énergie solaire 1 en une énergie électrique à la tension électrique de recharge de l'élément accumulateur d'énergie électrique 2.

Pour permettre d'alimenter le moteur électrique 3 par une tension électrique alternative monophasée de 230 V environ à partir de l'élément accumulateur d'énergie électrique 2 à tension nominale continue de 24 à 30 V environ, on interpose, entre l'élément accumulateur d'énergie électrique 2 et le moteur électrique 3, un convertisseur DC-AC 5 à deux étages 5a et 5b qui transforme l'énergie électrique de sortie à tension électrique continue de l'élément accumulateur d'énergie électrique 2 en une énergie électrique à tension alternative de sortie apte à alimenter le moteur électrique à courant alternatif 3.

Des bornes d'entrée 50 et 51 du convertisseur DC-AC 5 sont connectées aux bornes 42 et 43 de l'élément accumulateur d'énergie électrique 2, tandis que des bornes de sortie 52 et 53 sont connectées au moteur électrique à courant alternatif 3.

Un récepteur radio 6 reçoit un signal radio de commande 7 émis par un émetteur 8 distant, pour commander la mise en route du moteur 3. Le signal radio de commande 7 est sous forme d'une trame de quelques dizaines de millisecondes, contenant l'information de sens de rotation. À réception de ce signal radio de commande 7, le récepteur radio 6 adresse au convertisseur DC-AC 5 une commande correspondante 60 pour alimenter le moteur 3 qui actionne l'organe de fermeture ou d'occultation 9 dans le sens approprié.

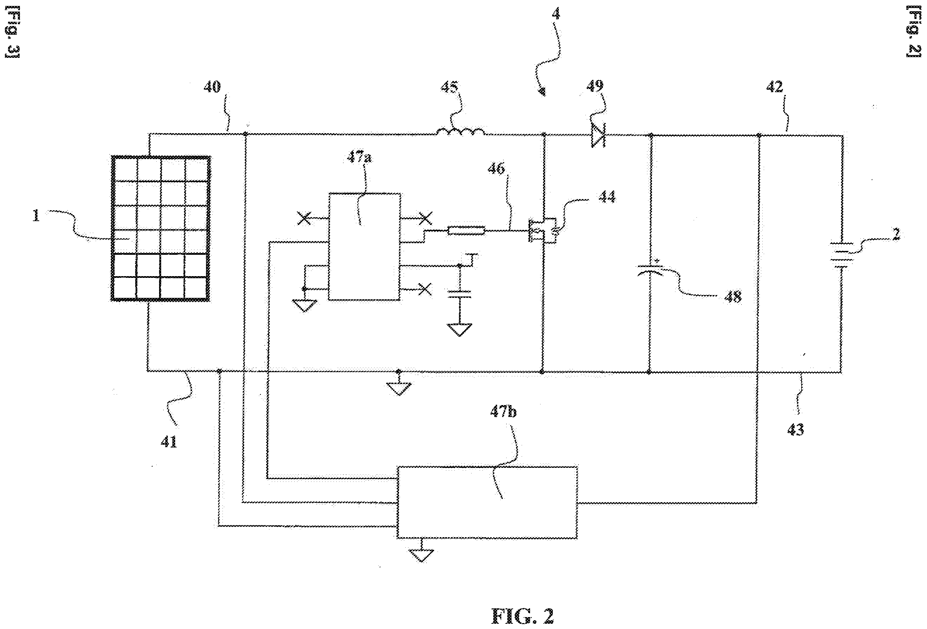

On considère maintenant la figure 2, qui illustre un mode de réalisation selon la présente invention pour le chargeur DC-DC 4 permettant d'alimenter l'élément accumulateur d'énergie électrique continue 2 à partir de la source d'énergie électrique solaire 1.

Dans ce mode de réalisation, le chargeur DC-DC 4 est un convertisseur élévateur de tension, de type hacheur parallèle, dont les bornes d'entrée 40 et 41 sont connectées à la source d'énergie électrique solaire 1, et dont les bornes de sortie 42 et 43 sont connectées à l'élément accumulateur d'énergie électrique 2. Le chargeur DC-DC 4 comporte un commutateur électronique 44 de type MOSFET (transistor à effet de champ à grille isolée), piloté par un circuit de commande comprenant un microcontrôleur 47b et un circuit de mise en forme 47a. Le circuit source-drain du commutateur électronique 44 est connecté en série avec une inductance 45 aux bornes d'entrée 40 et 41, et sa grille 46 reçoit, par l'intermédiaire du circuit de mise en forme 47a, un signal de commande impulsionnel généré par le microcontrôleur 47b. Un condensateur 48 est connecté aux bornes de sortie 42 et 43, et une diode Schottky49 est connectée entre le commutateur électronique 44 et le condensateur 48.

Le microcontrôleur 47b comprend un programme enregistré par lequel le microcontrôleur 47b scrute l'information de tension électrique aux bornes d'entrée 40 et 41, scrute l'information de courant électrique débité par la source d'énergie électrique solaire 1, et pilote la commutation du commutateur électronique 44 de façon à rester le plus près possible du point de puissance maximum de la source d'énergie électrique solaire 1. Ce point de puissance maximum se situe à proximité des 80 % de la tension maximale délivrée par la source d'énergie électrique solaire 1. Ce programme peut être du type généralement appelé MPPT (maximum Power Point Tracking), bien connu de l'homme du métier dans l'utilisation de panneaux solaires.

Le microcontrôleur 47b est également programmé pour maintenir la tension de recharge des batteries au bon niveau à chaque instant tout en limitant le courant si besoin est, notamment au moment de la recharge au-dessus de 80 % de la pleine charge des batteries composant l'élément accumulateur d'énergie électrique 2.

Le microcontrôleur 47b peut également être programmé pour équilibrer la charge des batteries, qui sont en série dans l'élément accumulateur d'énergie électrique 2, par la commande de transistors associés à des résistances d'équilibrage qui assurent la décharge du surplus d'énergie des batteries lorsque cela est nécessaire.

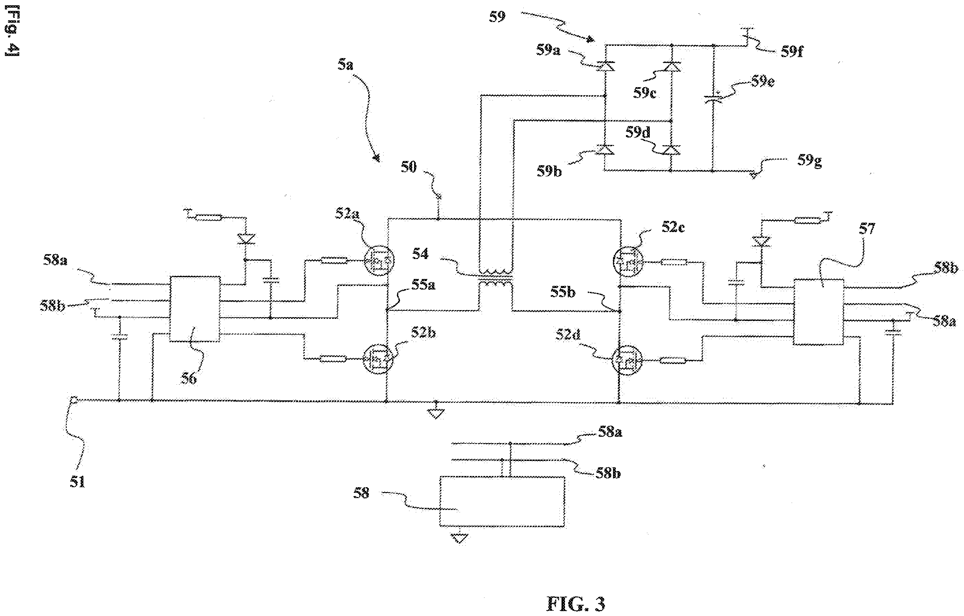

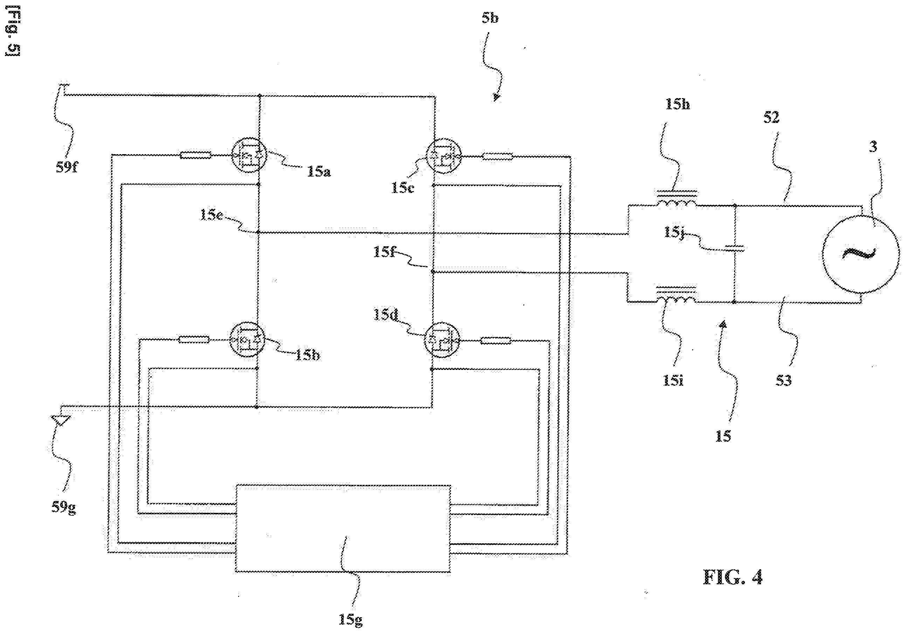

On considère maintenant les figures 3 et 4, qui illustrent un mode de réalisation selon la présente invention pour le convertisseur DC-AC 5 permettant d'alimenter le moteur électrique à courant alternatif 3 à partir de l'énergie électrique à tension continue délivrée par l'élément accumulateur d'énergie électrique 2.

La figure 3 illustre le premier étage 5a du convertisseur DC-AC 5, remplissant la fonction de convertisseur DC-DC élévateur de tension, pour convertir la tension continue relativement basse de l'élément accumulateur d'énergie électrique 2 en une tension continue de valeur suffisamment élevée, au minimum équivalente à la tension de crête de l'onde de tension alternative finale envisagée pour l'alimentation du moteur électrique à courant alternatif 3.

Dans le mode de réalisation illustré, que l'on peut choisir pour des raisons d'efficacité, le premier étage 5a comprend essentiellement un pont en H de quatre commutateurs électroniques 52a, 52b, 52c et 52d, qui sont avantageusement chacun de type MOSFET (transistor à effet de champ à grille isolée). Les commutateurs électroniques 52a et 52b sont tous deux connectés en série entre les bornes d'entrée 50 et 51, et leur point de jonction 55a est connecté à une première borne du primaire d'un transformateur élévateur de tension 54. De même, les commutateurs électroniques 52c et 52d sont tous deux connectés en série entre les bornes d'entrée 50 et 51, et leur point de jonction 55b est connecté à la seconde borne du primaire du transformateur élévateur de tension 54.

Les grilles des commutateurs électroniques 52a, 52b, 52c et 52d reçoivent, par l'intermédiaire de circuits de mise en forme 56 et 57, des signaux de commande impulsionnels générés par un microcontrôleur 58 sur ses sorties 58a et 58b. Le microcontrôleur 58 est programmé pour piloter successivement par sa sortie 58a la conduction du couple de commutateurs électroniques 52a et 52d, puis par sa sortie 58b la conduction du couple de commutateurs électroniques 52b et 52c, produisant sur le primaire du transformateur 54 une alimentation en onde carrée à rapport cyclique 1/1.

Le secondaire du transformateur élévateur de tension 54 est connecté à l'entrée d'un élément redresseur 59 qui, dans la réalisation illustrée , est un pont redresseur constitué de quatre diodes 59a, 59b, 59c et 59d, et qui est associé à un ou plusieurs condensateurs de filtrage 59e pour produire sur les bornes de sortie 59f et 59g une tension électrique redressée et filtrée.

Le transformateur élévateur de tension 54 est un transformateur haute fréquence, avantageusement de type planaire, apte à fonctionner à haute fréquence, par exemple à une fréquence de 50 kHz environ. Cela permet une transmission de puissance suffisante avec un transformateur à faible volume et faible encombrement. Dans un tel transformateur planaire, l'enroulement primaire et l'enroulement secondaire peuvent être chacun constitués d'un empilage de bobines élémentaires planes comprenant chacune une ou plusieurs couches de cuivre électriquement isolées les unes des autres et dont les extrémités sont connectées électriquement les unes aux autres, tandis que le circuit magnétique est constitué de noyaux en ferrite assemblés. Des exemples de tels transformateurs planaires sont décrits par exemple dans les documents EP 3300090 A1 ou US 7,663,460 B2. À titre d'exemple, de bons résultats peuvent être obtenus en utilisant un transformateur planaire de référence TP32D2402 produit et commercialisé par la société chinoise Shaanxi Gold-Stone Electronics Co., LTD.

Les commutateurs électroniques 52a, 52b, 52c et 52d fonctionnent à tension relativement réduite, la tension crête étant égale à la tension continue de l'élément accumulateur d'énergie électrique 2, c'est-à-dire d'environ 24 V à 30 V. Pour produire la puissance nécessaire à l'alimentation du moteur 3, le courant transité doit être assez important, ce qui impose l'utilisation de transistors à effet de champ possédant des caractéristiques très bonnes à l'état passant. D'autre part, ces commutateurs électroniques doivent présenter une vitesse de commutation inférieure ou égale à la descente naturelle du courant lors d'une commutation, de façon à ne pas dissiper trop d'énergie inutilement lors des commutations.

On considère maintenant la figure 4, qui illustre le second étage 5b du convertisseur DC-AC 5. Ce second étage transforme la tension de sortie continue du premier étage 5a en une tension alternative sinusoïdale apte à alimenter le moteur électrique 3. Dans le mode de réalisation illustré, ce second étage 5b se présente sous forme d'un pont en H constitué de quatre commutateurs électroniques 15a, 15b, 15c et 15d, qui sont avantageusement chacun de type MOSFET (transistor à effet de champ à grille isolée). Les commutateurs électroniques 15a et 15b sont tous deux connectés en série entre les bornes d'entrée 59f et 59g, et leur point de jonction 15e est connecté à une première borne de sortie 52 par l'intermédiaire d'un filtre passe bas 15. De même, les commutateurs électroniques 15c et 15d sont tous deux connectés en série entre les bornes d'entrée 59f et 59g, et leur point de jonction 15f est connecté à la seconde borne de sortie 53 par l'intermédiaire du même filtre passe bas 15.

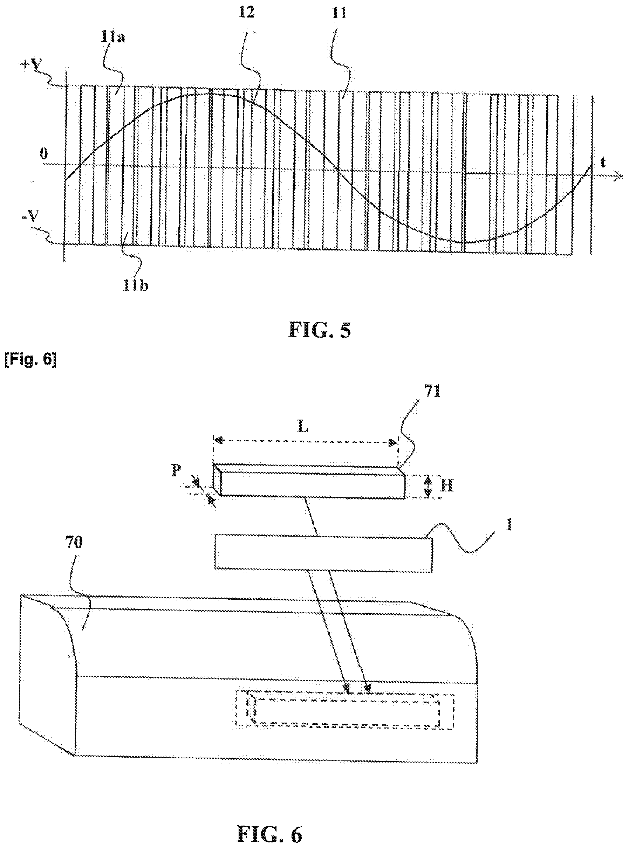

Les grilles des commutateurs électroniques 15a, 15b, 15c et 15d reçoivent des signaux de commande impulsionnels générés par un microcontrôleur 15g sur ses sorties respectives. Le microcontrôleur 15g est programmé pour piloter successivement la conduction du couple de commutateurs électroniques 15a et 15d pour générer en sortie une impulsion positive 11a, puis la conduction du couple de commutateurs électroniques 15b et 15c pour générer en sortie une impulsion négative 11b, et ainsi de suite, avec une modulation de largeur d'impulsions bipolaire produisant aux points de jonction 15e et 15f une tension de sortie 11 en créneaux à rapport cyclique variable telle qu'illustrée sur la figure 5.

Le filtre passe bas 15 peut par exemple comprendre une première inductance 15h en série entre le point de jonction 15e et la borne de sortie 52, une seconde inductance 15i en série entre le point de jonction15f et la borne de sortie 53, et un condensateur 15j entre les bornes de sortie 52 et 53. En sortie du filtre 15, la tension appliquée au moteur 3 est proche d'une sinusoïde, comme illustré par la courbe 12 sur la figure 5.

La figure 6 illustre un caisson de motorisation 70 d'organe d'occultation ou de fermeture, l'emplacement de la source d'énergie électrique solaire 1 en surface du caisson de motorisation 70, et l'emplacement de l'ensemble électronique 71 composé de l'élément accumulateur d'énergie électrique est des différents circuits électroniques précédemment décrits, permettant l'alimentation et la commande du moteur électrique à courant alternatif à tension nominale de 230 V pour l'entraînement d'un organe d'occultation ou de fermeture.

Grâce aux choix technologiques précédemment décrits, l'ensemble électronique 71 est particulièrement peu encombrant, occupant un volume sensiblement parallélépipédique ayant une longueur L inférieure ou égale à 350 mm, une hauteur H d'environ 70 mm, une profondeur P d'environ 20 mm.

Cela permet de loger l'ensemble électronique 71 à l'intérieur du caisson de motorisation 70, en position adjacente à la source d'énergie électrique solaire 1 qui elle-même est en surface du caisson de motorisation 70

La présente invention n'est pas limitée aux modes de réalisation qui ont été explicitement décrits, mais elle en inclut les diverses variantes et généralisations contenues dans le domaine des revendications ci-après.

## Revendications

1. Dispositif de motorisation (1-8) d'organe de fermeture ou d'occultation (9) dans un bâtiment, comprenant :
- au moins un moteur (3) couplé mécaniquement à l'organe de fermeture ou d'occultation (9),
- un élément accumulateur d'énergie électrique (2) à courant continu,
- une source d'énergie électrique solaire (1) délivrant une tension électrique continue,
- un convertisseur DC-AC (5) qui transforme l'énergie électrique de sortie à tension électrique continue de l'élément accumulateur d'énergie électrique (2) en une énergie électrique à tension alternative de sortie,
**caractérisé en ce que** :
- le moteur (3) est un moteur électrique à courant alternatif basse tension ayant une tension électrique efficace dans la plage comprise entre 50 et 1000 V,
- la source d'énergie électrique solaire (1) délivre une tension électrique continue inférieure à la tension électrique efficace du moteur électrique (3),
- l'élément accumulateur d'énergie électrique (2) présente une tension nominale inférieure à ladite tension électrique efficace et supérieure à la tension électrique continue délivrée par la source d'énergie électrique solaire (1),
- un chargeur DC-DC (4) convertit l'énergie électrique de sortie de la source d'énergie électrique solaire (1) en une énergie électrique à la tension électrique de recharge de l'élément accumulateur d'énergie électrique (2) à courant continu,
- le convertisseur DC-AC (5) alimente ledit moteur électrique (3) à courant alternatif.

2. Dispositif de motorisation selon la revendication 1, **caractérisé en ce que** la tension électrique efficace du moteur électrique (3) est de 230 V environ.

3. Dispositif de motorisation selon l'une ou l'autre des revendications 1 et 2, **caractérisé en ce que** la tension de sortie de la source d'énergie électrique solaire (1) est comprise dans une plage de 12 à 18 V environ.

4. Dispositif de motorisation selon l'une quelconque des revendications 1 à 3, **caractérisé en ce que** la tension nominale de l'élément accumulateur d'énergie électrique (2) est comprise dans une plage de 24 V à 30 V environ.

5. Dispositif de motorisation selon l'une quelconque des revendications 1 à 4, **caractérisé en ce que** le chargeur DC-DC (4) est piloté par un circuit de commande (47a, 47b) régulant la tension électrique et le courant électrique prélevés sur la source d'énergie électrique solaire (1) de façon à rester au plus près du point de puissance maximum de la source d'énergie électrique solaire (1).

6. Dispositif de motorisation selon l'une quelconque des revendications 1 à 5, **caractérisé en ce que** le convertisseur DC-AC (5) est un convertisseur à deux étages successifs, comprenant un premier étage (5a) sous forme d'un convertisseur DC-DC élévateur de tension qui convertit la tension électrique continue de l'élément accumulateur d'énergie électrique (2) en une tension de sortie continue au minimum équivalente à la tension de crête de l'onde de la tension finale envisagée pour l'alimentation du moteur électrique (3), et comprenant un deuxième étage (5b) qui transforme la tension de sortie continue du premier étage (5a) en une tension alternative sinusoïdale apte à alimenter le moteur électrique (3).

7. Dispositif de motorisation selon la revendication 6, **caractérisé en ce que** le premier étage DC-DC (5a) comprend un pont en H de commutateurs électroniques (52a, 52b, 52c, 52d), dont les points d'entrée (50, 51) sont aux bornes de l'élément accumulateur d'énergie électrique (2), et dont les points de jonction (55a, 55b) alimentent le primaire d'un transformateur élévateur de tension (54) dont le secondaire alimente un élément redresseur (59) fournissant ladite tension de sortie continue.

8. Dispositif de motorisation selon la revendication 7, **caractérisé en ce que** le transformateur élévateur de tension (54) est un transformateur planaire apte à fonctionner à haute fréquence.

9. Dispositif de motorisation selon la revendication 8, **caractérisé en ce que** le pont en H du premier étage DC-DC (5a) fonctionne à une fréquence de 50 kHz environ.

10. Dispositif de motorisation selon l'une quelconque des revendications 6 à 9, **caractérisé en ce que** le second étage (5b) comprend un pont en H de commutateurs électroniques (15a, 15b, 15c, 15d), dont les points d'entrée (59f, 59g) sont aux bornes de l'élément redresseur (59), dont les points de jonction (15e, 15f) alimentent le moteur (3) par l'intermédiaire d'un filtre passe bas (15), les commutateurs électroniques (15a, 15b, 15c, 15d) étant pilotés par un microcontrôleur (15g) programmé pour réaliser une modulation de largeur d'impulsions bipolaire produisant aux points de jonction 15e et 15f une tension de sortie (11) en créneaux à rapport cyclique variable qui, après filtration par le filtre passe bas (15), alimente le moteur (3) par une tension monophasée sensiblement sinusoïdale (12).

11. Organe de fermeture ou d'occultation dans un bâtiment, muni d'un dispositif de motorisation selon l'une quelconque des revendications 1 à 10.

## Patentansprüche

1. Vorrichtung zum Antrieb (1-8) eines Schließ- oder Beschattungselements (9) in einem Gebäude, umfassend:
- mindestens einen Antrieb (3), der mechanisch mit dem Schließ- oder Beschattungselement (9) gekoppelt ist,
- ein elektrisches Energiespeicherelement (2) mit Gleichstrom,
- eine elektrische Solarenergiequelle (1), die eine elektrische Gleichspannung liefert,
- einen DC-AC-Konverter (5), der die elektrische Ausgangsenergie mit elektrischer Gleichspannung des elektrischen Energiespeicherelements (2) in elektrische Energie mit Ausgangswechselspannung umwandelt,
**dadurch gekennzeichnet, dass**:
- der Antrieb (3) ein elektrischer Antrieb mit Niederspannungs-Wechselstrom mit einer effektiven elektrischen Spannung im Bereich zwischen 50 und 1000 V ist,
- die elektrische Solarenergiequelle (1) eine elektrische Gleichspannung liefert, die niedriger ist als die effektive elektrische Spannung des elektrischen Antriebs (3),
- das elektrische Energiespeicherelement (2) eine Nennspannung aufweist, die niedriger als die besagte effektive elektrische Spannung und höher als die von der elektrischen Solarenergiequelle (1) gelieferte elektrische Gleichspannung ist,
- ein DC-DC-Ladegerät (4) die elektrische Ausgangsenergie der elektrischen Solarenergiequelle (1) in elektrische Energie mit der elektrischen Spannung konvertiert, um das elektrische Energiespeicherelement (2) mit Gleichstrom wieder aufzuladen,
- der DC-AC-Konverter (5) besagten elektrischen Antrieb (3) mit Wechselstrom versorgt.

2. Antriebsvorrichtung nach Anspruch 1, **dadurch gekennzeichnet, dass** die effektive elektrische Spannung des elektrischen Antriebs (3) etwa 230 V ist.

3. Antriebsvorrichtung nach einem der Ansprüche 1 und 2, **dadurch gekennzeichnet, dass** die Ausgangsspannung der elektrischen Solarenergiequelle (1) im Bereich von etwa 12 bis 18 V liegt.

4. Antriebsvorrichtung nach einem der Ansprüche 1 bis 3, **dadurch gekennzeichnet, dass** die Nennspannung des elektrischen Energiespeicherelements (2) im Bereich von etwa 24 V bis 30 V liegt.

5. Antriebsvorrichtung nach einem der Ansprüche 1 bis 4, **dadurch gekennzeichnet, dass** das DC-DC-Ladegerät (4) von einer Steuerschaltung (47a, 47b) gesteuert wird, welche die elektrische Spannung und den entnommenen elektrischen Strom der elektrischen Solarenergiequelle (1) derart regelt, um so nahe wie möglich am maximalen Leistungspunkt der elektrischen Solarenergiequelle (1) zu bleiben.

6. Antriebsvorrichtung nach einem der Ansprüche 1 bis 5, **dadurch gekennzeichnet, dass** der DC-AC-Konverter (5) ein Konverter mit zwei aufeinanderfolgenden Stufen ist, umfassend eine erste Stufe (5a) in Form eines spannungsverstärkenden DC-DC-Konverters, der die elektrische Gleichspannung des elektrischen Energiespeicherelements (2) auf eine kontinuierliche Ausgangsgleichspannung konvertiert, deren Minimum äquivalent zu der Spitzenspannung der Welle der vorgesehenen Endspannung für die Versorgung des elektrischen Antriebs (3) ist, und umfassend eine zweite Stufe (5b), welche die direkte Ausgangsgleichspannung der ersten Stufe (5a) in eine sinusförmige Wechselspannung umwandelt, die den elektrischen Antrieb (3) versorgen kann.

7. Antriebsvorrichtung nach Anspruch 6, **dadurch gekennzeichnet, dass** die erste DC-DC-Stufe (5a) eine H-Brücke aus elektronischen Schaltern (52a, 52b, 52c, 52d) umfasst, deren Eingangspunkte (50, 51) an den Anschlüssen des elektrischen Energiespeicherelements (2) liegen und deren Verbindungspunkte (55a, 55b) die Primärseite eines Spannungserhöhungstransformators (54) versorgen, dessen Sekundärseite ein Gleichrichterelement (59) versorgt, welches die besagte Ausgangsgleichspannung liefert.

8. Antriebsvorrichtung nach Anspruch 7, **dadurch gekennzeichnet, dass** der Spannungserhöhungstransformator (54) ein Planartransformator ist, der mit hoher Frequenz arbeiten kann.

9. Antriebsvorrichtung nach Anspruch 8, **dadurch gekennzeichnet, dass** die H-Brücke der ersten DC-DC-Stufe (5a) mit einer Frequenz von etwa 50 kHz arbeitet.

10. Antriebsvorrichtung nach einem der Ansprüche 6 bis 9, **dadurch gekennzeichnet, dass** die zweite Stufe (5b) eine H-Brücke aus elektronischen Schaltern (15a, 15b, 15c, 15d) umfasst, deren Eingangspunkte (59f, 59g) an den Anschlüssen des Gleichrichterelements (59) liegen und deren Verbindungspunkte (15e, 15f) über einen Tiefpassfilter (15) den Antrieb (3) versorgen, wobei die elektronischen Schalter (15a, 15b, 15c, 15d) von einem Mikrocontroller (15g) gesteuert werden, der so programmiert ist, dass er eine bipolare Pulsweitenmodulation durchführt, die an den Verbindungspunkten 15e und 15f mit einem Nocken mit variablem Tastverhältnis eine Ausgangsspannung (11) erzeugt, die nach der Filterung durch den Tiefpassfilter (15) den Antrieb (3) mit einer im Wesentlichen sinusförmigen einphasigen Spannung (12) versorgt.

11. Schließ- oder Beschattungselement in einem Gebäude, ausgestattet mit einer Antriebsvorrichtung nach einem der Ansprüche 1 bis 10.

## Claims

1. A drive device (1-8) for a closure or shutter component (9) in a building, comprising:
- at least one motor (3) mechanically coupled to the closure or shutter component (9);
- a direct current electrical energy accumulator element (2);
- a solar electrical energy source (1) delivering a direct voltage;
- a DC-AC converter (5) that converts the electrical energy with a direct output voltage of the electrical energy accumulator element (2) into electrical energy with an alternating output voltage;
**characterized in that**:
- the motor (3) is a low-voltage alternating current electric motor having an effective electric voltage in the range ranging between 50 to 1,000 V;
- the solar electrical energy source (1) delivers a direct voltage lower than the effective electric voltage of the electric motor (3);
- the electrical energy accumulator element (2) has a nominal voltage lower than said effective electric voltage and greater than the direct voltage delivered by the solar electrical energy source (1);
- a DC-DC charger (4) converts the output electrical energy of the solar electrical energy source (1) into electrical energy with the recharging electric voltage of the direct current electrical energy accumulator element (2);
- the DC-AC converter (5) supplies said alternating current electric motor (3).

2. The drive device as claimed in claim 1, **characterized in that** the effective electric voltage of the electric motor (3) is approximately 230 V.

3. The drive device as claimed in either of claims 1 and 2, **characterized in that** the output voltage of the solar electrical energy source (1) is within a range of approximately 12 to 18 V.

4. The drive device as claimed in any one of claims 1 to 3, **characterized in that** the nominal voltage of the electrical energy accumulator element (2) is within a range of approximately 24 V to 30 V.

5. The drive device as claimed in any one of claims 1 to 4, **characterized in that** the DC-DC charger (4) is controlled by a control circuit (47a, 47b) regulating the electric voltage and the electric current drawn from the solar electrical energy source (1), so as to remain as close as possible to the maximum power point of the solar electrical energy source (1).

6. The drive device as claimed in any one of claims 1 to 5, **characterized in that** the DC-AC converter (5) is a converter with two successive stages, comprising a first stage (5a) in the form of a step-up DC-DC converter, which converts the direct voltage of the electrical energy accumulator element (2) into a direct output voltage at least equivalent to the peak voltage of the wave of the final voltage contemplated for powering the electric motor (3), and comprising a second stage (5b), which converts the direct output voltage of the first stage (5a) into a sinusoidal alternating voltage capable of powering the electric motor (3).

7. The drive device as claimed in claim 6, **characterized in that** the first DC-DC stage (5a) comprises an H-bridge of electronic switches (52a, 52b, 52c, 52d), the input points (50, 51) of which are at the terminals of the electrical energy accumulator element (2), and the junction points (55a, 55b) of which supply the primary of a step-up transformer (54), the secondary of which supplies a rectifier element (59) providing said direct output voltage.

8. The drive device as claimed in claim 7, **characterized in that** the step-up transformer (54) is a planar transformer capable of operating at high frequency.

9. The drive device as claimed in claim 8, **characterized in that** the H-bridge of the first DC-DC stage (5a) operates at a frequency of approximately 50 kHz.

10. The drive device as claimed in any one of claims 6 to 9, **characterized in that** the second stage (5b) comprises an H-bridge of electronic switches (15a, 15b, 15c, 15 d), the input points (59f, 59g) of which are at the terminals of the rectifier element (59), the junction points (15e, 15f) of which supply the motor (3) by means of a low-pass filter (15), the electronic switches (15a, 15b, 15c, 15d) being controlled by a microcontroller (15g) programmed to carry out a bipolar pulse width modulation producing an output voltage (11) with variable duty cycle slots at the junction points 15e and 15f, which, after filtration by the low-pass filter (15), powers the motor (3) with a substantially sinusoidal single-phase voltage (12).

11. A closure or shutter component in a building, provided with a drive device as claimed in any one of claims 1 to 10.
